# EUROPEAN PATENT APPLICATION

(11) **EP 4 528 155 A1**
(43) Date of publication of application: **26.03.2025**
(21) Application number: 23940948.5
(22) Date of filing: 24.07.2023
(51) Int. Cl.: F21V 21/26, F21V 21/15, F21V 33/00, G01C 19/02

(54) **MULTI-JOINT LIGHTING DEVICE COMPRISING TENSION ARM ASSEMBLY**

(30) Priority: 22.06.2023 KR 20230080611
(71) Applicant: Dentis Co., Ltd, Daegu 42718 (KR)
(72) Inventor: SIM, Gi Bong, Daegu 42115 (KR); KIM, Jung II, Daegu 42927 (KR); OH, Yoon Sang, Daegu 41971 (KR); YOON, Jae Min, Daegu 41090 (KR); SIM, Sang Woo, Daegu 41118 (KR); KIM, Jeong Su, Daegu 41087 (KR); CHO, Seong Hwan, Daegu 41414 (KR); KIM, Chan Ho, Daegu 41121 (KR); KIM, Yong Hee, Daegu 41476 (KR); GIL, Geun Hyeong, Daegu 42915 (KR); SUNG, Hyun Su, Daegu 42181 (KR); KIM,Ji Heon, Daegu 42917 (KR); JO, In Jae, Gyeongsangbuk-do 38659 (KR); LEE, Bok Hui, Daegu 42688 (KR)
(74) Representative: Isarpatent
(86) International application number: PCT/KR2023/010657
(87) International publication number: WO 2024/262695

(57) **Abstract**

A multi-joint lighting device including a tension arm assembly according to the present invention includes a lighting unit including a light emission module configured to radiate light toward a target, a head arm assembly connected to the lighting unit, a base arm assembly connected to a settling base fixed to a predetermined settling point, and a tension arm assembly having one side tiltably connecting the head arm assembly and the other side tiltably connected to the base arm assembly and providing tension compensating for self-loads of the head arm assembly and the lighting unit according to a tilting angle of the head arm assembly to implement a free-stop height adjustment operation of the lighting unit.

## Description

### Field of the Invention

The present invention relates to a multi-joint lighting device, and more particularly, to a multi-joint lighting device that includes a tension arm assembly, and can thereby easily implement a free-stop height adjustment operation of a lighting unit.

### Discussion of Related Art

A surgical light is a special type of lighting device used during surgery. The surgical light provides bright, focused light to a surgical target area, helping the surgeon or surgical team secure a field of view and operate accurately while performing the task.

Further, in addition to basic functions such as light intensity adjustment and color temperature adjustment, the surgical light provides functions for freely adjusting the position and angle of light, thereby allowing the surgeon or surgical team to secure an optimum field of view and apply necessary light at a specific angle.

To this end, for the light to be fixed after being placed at a desired position, the surgical light is connected by a plurality of arms installed on a ceiling, a wall, etc., and generally, three-axis arms or two-axis arms are most commonly used.

In the case of a three-axis arm, since there are three rotational degrees of freedom for adjusting the light, there are advantages in that it is convenient to control the position, and it is easy to respond to various situations.

However, a three-axis arm has a disadvantage in that, due to its characteristics, it is difficult to install in a space with a low ceiling.

On the other hand, a two-axis arm has an advantage in that it can be installed even in a space with a low ceiling, but has limitations in position control due to having only two rotational degrees of freedom for adjusting the light.

In particular, when a controller or a display is attached to the arm, the two-axis arm also has a disadvantage that it is inconvenient to use because an angle of the controller or display also changes according to an angle of the light that changes according to vertical height adjustment.

### Description of the Invention

### Technical Problem

The present invention is directed to providing a multi-joint lighting device that can easily be installed even in a space with a low ceiling and enables the position of light to be controlled conveniently.

The objectives of the present invention are not limited to that mentioned above, and other unmentioned objectives should be clearly understood by those of ordinary skill in the art based on the description below.

### Technical Solution

According to an aspect of the present invention, there is provided a multi-joint lighting device including a tension arm assembly, the multi-joint lighting device including a lighting unit including a light emission module configured to radiate light toward a target, a head arm assembly connected to the lighting unit, a base arm assembly connected to a settling base fixed to a predetermined settling point, and a tension arm assembly having one side tiltably connecting the head arm assembly and the other side tiltably connected to the base arm assembly and providing tension compensating for self-loads of the head arm assembly and the lighting unit according to a tilting angle of the head arm assembly to implement a free-stop height adjustment operation of the lighting unit.

At this time, the head arm assembly may be connected to the tension arm assembly to be rotatable about a rotation axis in a direction parallel to an extending direction of the tension arm assembly, and in this case, a slip ring module configured to maintain electrical connection between the head arm assembly and the tension arm assembly may be disposed at a connecting portion between the head arm assembly and the tension arm assembly.

In addition, the lighting unit may be connected to the head arm assembly to be rotatable about a rotation axis in a horizontal direction, and in this case, a slip ring module configured to maintain electrical connection between the lighting unit and the head arm assembly may be disposed at a connecting portion between the lighting unit and the head arm assembly.

Further, the multi-joint lighting device may further include a display unit disposed on the head arm assembly to display a predetermined image and formed to rotate relative to the head arm assembly together with the lighting unit.

Here, the display unit may include a gyro sensor configured to sense an angle of the display unit relative to the direction of gravity and an image controller configured to, based on a sensing value of the gyro sensor, control rotation of an image transmitted by the display unit.

Meanwhile, the tension arm assembly may include a support unit configured to provide a support force between the head arm assembly and the base arm assembly, a tension providing unit disposed parallel to the support unit and configured to provide the tension compensating for the self-loads of the head arm assembly and the lighting unit according to the tilting angle of the head arm assembly, a first joint unit disposed to be connected to the head arm assembly and configured to rotatably fix a first rotating shaft disposed at one side of the tension providing unit at a first point and rotatably fix a second rotating shaft disposed at one side of the support unit at a second point spaced apart from the first point, and a second joint unit disposed to be connected to the base arm assembly and configured to rotatably fix a third rotating shaft disposed at the other side of the tension providing unit at a third point and rotatably fix a fourth rotating shaft disposed at the other side of the support unit at a fourth point spaced apart from the third point.

Here, the tension providing unit may include a shaft core that extends in a direction parallel to the support unit, has the first rotating shaft formed at one side and the second rotating shaft formed at the other side, and is formed to be linearly movable toward the one side or the other side, an elastic member disposed to surround a circumference of a portion of the shaft core and formed to have elasticity to provide resistance against a compressive force, a first stopper member disposed at one side of the elastic member to be movable along the shaft core and restricted from moving toward the one side past an arbitrary first reference point formed on the shaft core, and a second stopper member disposed at the other side of the elastic member to be movable along the shaft core and restricted from moving toward the other side past an arbitrary second reference point formed on the shaft core.

In addition, the tension providing unit may further include a unit housing disposed to surround the circumference of each of the shaft core and the elastic member and formed to be movable together with the shaft core.

In addition, the second joint unit may include a first joint structure on which the third point where the third rotating shaft is fixed is formed and a second joint structure on which the fourth point where the fourth rotating shaft is fixed is formed and which is formed to be able to be coupled to the first joint structure.

In addition, the second joint unit may further include a connection shaft having one portion connected to the base arm assembly to be rotatable about a rotation axis in a vertical direction and another portion passing through the first joint structure to be fixed to the second joint structure.

### Advantageous Effects

A multi-joint lighting device including a tension arm assembly of the present invention for achieving the objectives described above includes a tension arm assembly having one side tiltably connecting a head arm assembly and the other side tiltably connected to a base arm assembly, thereby having an advantage in that a height of a lighting unit can be freely changed even in a space with a low ceiling.

In particular, the tension arm assembly provides tension compensating for self-loads of the head arm assembly and the lighting unit according to a tilting angle of the head arm assembly, thereby easily implementing a free-stop height adjustment operation of the lighting unit.

The advantageous effects of the present invention are not limited to those mentioned above, and other unmentioned advantageous effects should be clearly understood by those of ordinary skill in the art based on the claims below.

### Brief Description of the Drawings

FIG. 1 is a view illustrating an appearance of a multi-joint lighting device according to one embodiment of the present invention;
FIG. 2 is a view illustrating operation degrees of freedom of the multi-joint lighting device according to one embodiment of the present invention;
FIG. 3 is a view illustrating a structure according to a rotating operation of each part in the multi-joint lighting device according to one embodiment of the present invention;
FIG. 4 is a view illustrating an appearance according to a change in a height of a lighting unit in the multi-joint lighting device according to one embodiment of the present invention;
FIG. 5 is a view illustrating an appearance of a gyro sensor disposed in a display unit in the multi-joint lighting device according to one embodiment of the present invention;
FIGS. 6 and 7 are exploded views of each component constituting a tension arm assembly in the multi-joint lighting device according to one embodiment of the present invention;
FIG. 8 is a detailed view of a second joint unit of the tension arm assembly in the multi-joint lighting device according to one embodiment of the present invention; and
FIGS. 9 and 10 are views illustrating a locking structure of the tension arm assembly in the multi-joint lighting device according to one embodiment of the present invention.

### Description of Exemplary Embodiments

In this specification, when one component (or region, layer, portion, etc.) is referred to as being "on," "connected to," or "coupled to" another component, it means that the component (or region, layer, portion, etc.) can be directly disposed on/connected to/coupled to the other component, or an intervening third component may also be present.

Like reference numerals refer to like components throughout the specification. Further, in the drawings, the thicknesses, ratios, and dimensions of components may be exaggerated for effective description of technical contents.

The term "and/or" includes any and all combinations of one or more of the associated listed items.

Terms such as "first" and "second" may be used herein to describe various components, but these components should not be limited by these terms. The terms are only used to distinguish one component from other components. For example, without departing from the scope of rights of the present invention, a first component may be referred to as a second component, and likewise, a second component may be referred to as a first component. A singular expression includes a plural expression unless the context clearly indicates otherwise.

In addition, terms such as "beneath," "below," "on," and "above" are used herein to describe the relationship between configurations illustrated in the drawings. The terms are spatially relative concepts and are described based on orientations depicted in the drawings.

Unless otherwise defined, all terms including technical or scientific terms used herein have the same meaning as commonly understood by those of ordinary skill in the art to which the present invention pertains. Furthermore, terms such as terms defined in commonly used dictionaries should be interpreted as having a meaning consistent with the meaning in the context of the relevant art, and aside from ideal or overly formal interpretations, should be interpreted as explicitly defined herein.

Terms such as "include" or "have" should be understood as specifying that features, numbers, steps, operations, elements, components, or combinations thereof are present and not as precluding the possibility of the presence or addition of one or more other features, numbers, steps, operations, elements, components, or combinations thereof in advance.

Hereinafter, embodiments of the present invention will be described in detail with reference to the accompanying drawings.

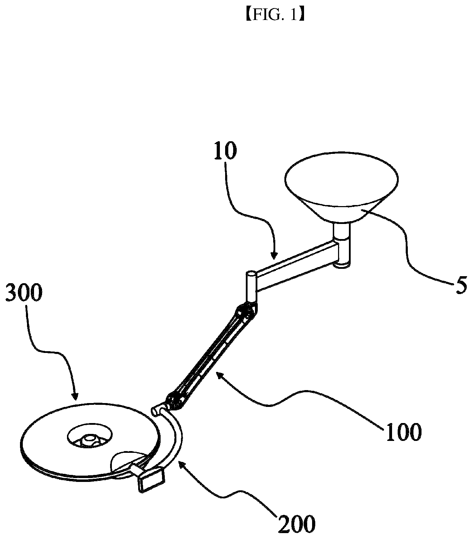

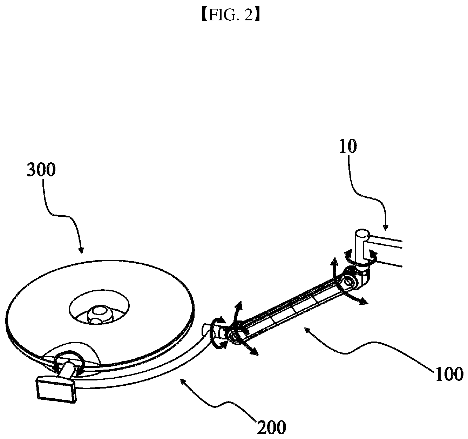

FIG. 1 is a view illustrating an appearance of a multi-joint lighting device according to one embodiment of the present invention, and FIG. 2 is a view illustrating operation degrees of freedom of the multi-joint lighting device according to one embodiment of the present invention.

As illustrated in FIGS. 1 and 2, a multi-joint lighting device according to one embodiment of the present invention includes a lighting unit 300, a head arm assembly 200, a base arm assembly 10, and a tension arm assembly 100.

The lighting unit 300 includes a light emission module configured to radiate light toward a target.

The lighting unit 300 of the present embodiment is a surgical light for a medical purpose and has a form including a frame having a circular cross-section and a plurality of light emission modules configured to radiate light toward one surface of the frame.

However, such a form of the present embodiment is only one example of a form in which the lighting unit 300 is applied, and the lighting unit 300 may be utilized for various purposes other than a medical purpose, and a specific form of the lighting unit 300, the type of light emission module, etc., may be changed without limitations.

The head arm assembly 200 is connected to the lighting unit 300.

In addition, the lighting unit 300 may be connected to the head arm assembly 200 to be rotatable about a rotation axis in a horizontal direction.

In the present embodiment, the head arm assembly 200 is connected to a side portion of the lighting unit 300 and has a form extending in a circular arc shape along a circumference of the lighting unit 300.

However, this also is only one embodiment, and the head arm assembly 200 may be implemented in various other forms.

The base arm assembly 10 is connected to a settling base 5 fixed to a predetermined settling point such as a ceiling or a wall.

The settling base 5 applied to the present embodiment is formed to be installed on a ceiling, and the base arm assembly 10 is connected to the settling base 5 to be rotatable about a rotation axis in a vertical direction.

The tension arm assembly 100 is disposed to connect the head arm assembly 200 and the base arm assembly 10 to each other. Specifically, one side of the tension arm assembly 100 tiltably connects the head arm assembly 200, and the other side of the tension arm assembly 100 is tiltably connected to the base arm assembly 10.

Accordingly, due to the tension arm assembly 100, the present invention has an advantage in that the height of the lighting unit can be freely changed even in a space with a low ceiling.

At this time, the one side and the other side of the tension arm assembly 100 are orientations set for convenience of description, and in this specification, the one side of the tension arm assembly 100 is defined as an orientation in which the tension arm assembly 100 is connected to the head arm assembly 200, and the other side of the tension arm assembly 100 is defined as an orientation in which the tension arm assembly 100 is connected to the base arm assembly 10.

In addition, the head arm assembly 200 may be connected to the tension arm assembly 100 to be rotatable about a rotation axis in a direction parallel to an extending direction of the tension arm assembly 100.

Further, the other side of the tension arm assembly 100 may be connected to the base arm assembly 10 to be rotatable about a rotation axis in the vertical direction.

In addition, the tension arm assembly 100 may provide tension compensating for self-loads of the head arm assembly 200 and the lighting unit 300 according to a tilting angle of the head arm assembly 200 to implement a free-stop height adjustment operation of the lighting unit 300.

A specific structure of the tension arm assembly 100 will be described below.

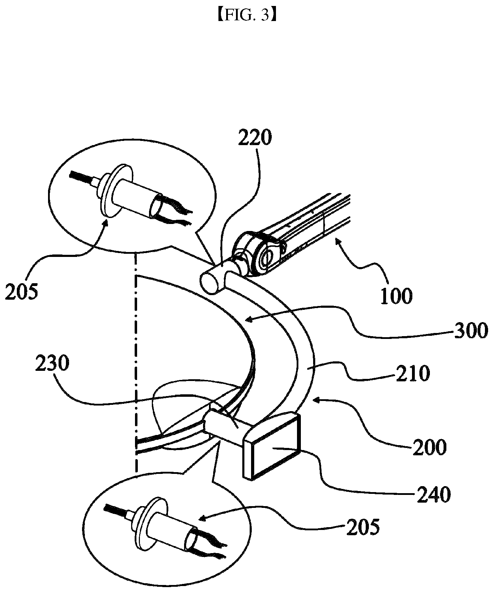

FIG. 3 is a view illustrating a structure according to a rotating operation of each part in the multi-joint lighting device according to one embodiment of the present invention.

As illustrated in FIG. 3, the lighting unit 300 may be connected to the head arm assembly 200 to be rotatable about a rotation axis in the horizontal direction, and the head arm assembly 200 may be connected to the tension arm assembly 100 to be rotatable about a rotation axis in the direction parallel to the extending direction of the tension arm assembly 100.

In the present embodiment, the head arm assembly 200 includes a curved shaft 210 formed to extend in a circular arc shape along the circumference of the lighting unit 300.

In addition, the head arm assembly 200 includes a first rotating part 220 configured to rotatably connect the curved shaft 210 and the tension arm assembly 100 and a second rotating part 230 configured to rotatably connect the curved shaft 210 and the lighting unit 300.

At this time, a slip ring module 205 configured to maintain electrical connection between the objects connected to each other may be disposed on each of the first rotating part 220, which is a connecting portion between the head arm assembly 200 and the tension arm assembly 100, and the second rotating part 230, which is a connecting portion between the lighting unit 300 and the head arm assembly 200.

In addition, the multi-joint lighting device of the present embodiment further includes a display unit 240 disposed on the head arm assembly 200 to display a predetermined image and formed to rotate relative to the head arm assembly 200 together with the lighting unit 300.

Conventionally, when a controller or a display is attached as described above, there is a disadvantage that it is inconvenient to use because an angle of the controller or display also changes according to vertical height adjustment of the light.

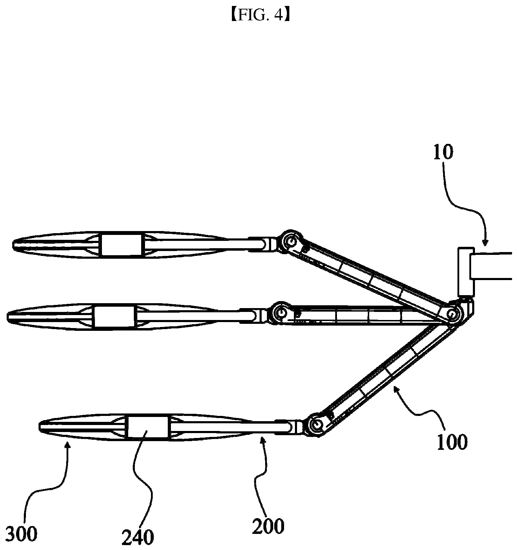

FIG. 4 is a view illustrating an appearance according to a change in the height of the lighting unit in the multi-joint lighting device according to one embodiment of the present invention.

As illustrated in FIG. 4, in the case of the present invention, since the one side of the tension arm assembly 100 tiltably connects the head arm assembly 200, and the other side of the tension arm assembly 100 is tiltably connected to the base arm assembly 10, the display unit 240 can always maintain a constant angle relative to a horizontal state or a horizontal plane regardless of the height of the lighting unit 300.

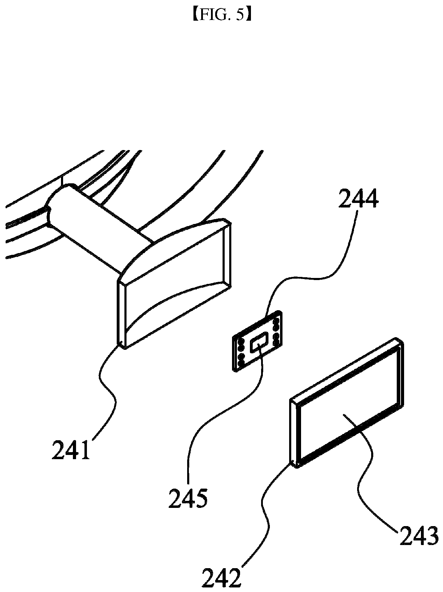

In addition, FIG. 5 is a view illustrating an appearance of a gyro sensor 245 disposed in the display unit 240 in the multi-joint lighting device according to one embodiment of the present invention.

As illustrated in FIG. 5, in the present embodiment, the display unit 240 includes a first module frame 241 and a second module frame 242 coupled to each other and forming an inner space, and a display module 243 configured to transmit an image is provided on the second module frame 242.

In addition, the display unit 240 of the present embodiment may include the gyro sensor 245 disposed in the inner space formed by the first module frame 241 and the second module frame 242 and configured to sense an angle of the display unit 240 relative to the direction of gravity and an image controller 244 configured to, based on a sensing value of the gyro sensor 245, control rotation of an image transmitted by the display unit 240.

That is, in the present embodiment, the display unit 240 can always maintain a constant angle relative to the horizontal state or the horizontal plane regardless of the height of the lighting unit 300 as described above, and in addition, even when the angle of the display unit 240 is changed, the image controller 244 controls rotation of the image transmitted by the display unit 240 to enable convenient use.

A specific structure of the tension arm assembly 100 will be described below.

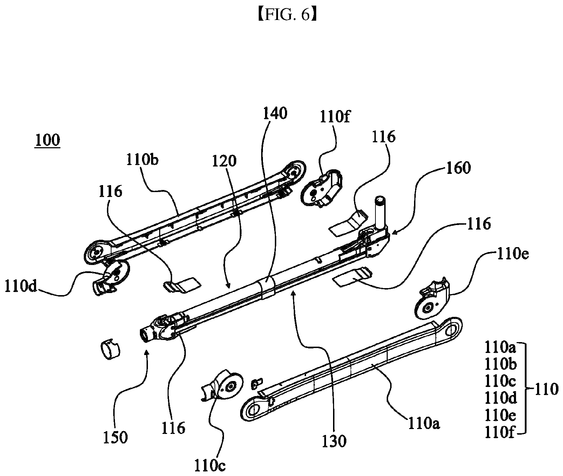

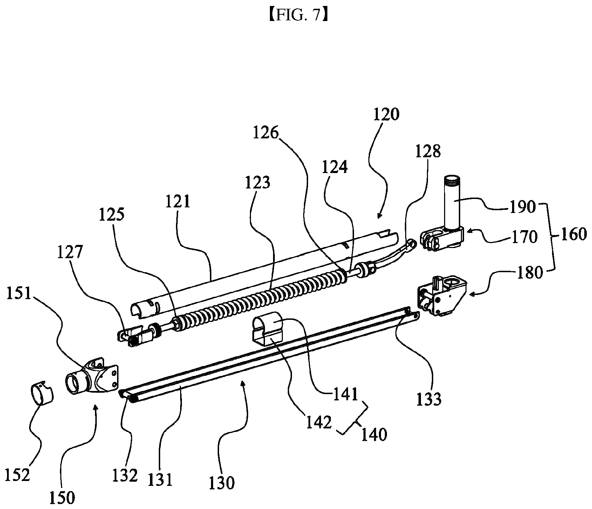

FIGS. 6 and 7 are exploded views of each component constituting the tension arm assembly 100 in the multi-joint lighting device according to one embodiment of the present invention.

As illustrated in FIGS. 6 and 7, in the present embodiment, the tension arm assembly 100 includes a support unit 130, a tension providing unit 120, a first joint unit 150, a second joint unit 160, and an external frame 110.

The support unit 130 is disposed to provide a support force between the head arm assembly 200 and the base arm assembly 10.

In the present embodiment, the support unit 130 includes an extension support member 131 extending in a longitudinal direction between the head arm assembly 200 and the base arm assembly 10 to provide the support force.

In addition, a second rotating shaft 132 is provided on one side of the extension support member 131, and a fourth rotating shaft 133 is provided on the other side thereof.

The tension providing unit 120 is disposed parallel to the support unit 130 and serves to provide the tension compensating for the self-loads of the head arm assembly 200 and the lighting unit 300 according to the tilting angle of the head arm assembly 200.

To this end, in the present embodiment, specifically, the tension providing unit 120 includes a shaft core 124, an elastic member 123, a first stopper member 125, a second stopper member 126, and a unit housing 121.

The shaft core 124 extends in a direction parallel to the support unit 130 and has a first rotating shaft 127 formed at one side and a second rotating shaft 128 formed at the other side. In addition, the shaft core 124 is formed to be linearly movable toward the one side or the other side between the head arm assembly 200 and the base arm assembly 10.

The elastic member 123 is disposed to surround a circumference of a portion of the shaft core 124 and is formed to have elasticity to provide resistance against a compressive force.

In addition, the first stopper member 125 is disposed at one side of the elastic member 123 to be movable along the shaft core 124. However, the first stopper member 125 is restricted from moving toward the one side past an arbitrary first reference point formed on the shaft core 124.

At this time, the first reference point may be set within a region close to the head arm assembly 200 within the overall length of the shaft core 124.

In addition, the second stopper member 126 is disposed at the other side of the elastic member 123 to be movable along the shaft core 124. However, the second stopper member 126 is restricted from moving toward the other side past an arbitrary second reference point formed on the shaft core 124.

At this time, the second reference point may be set within a region close to the base arm assembly 10 within the overall length of the shaft core 124.

In addition, the unit housing 121 is disposed to surround the circumference of each of the shaft core 124 and the elastic member 123 and formed to be movable together with the shaft core 124.

Further, the unit housing 121 may serve to restrict the first stopper member 125 from moving toward the one side from the first reference point and may serve to restrict the second stopper member 126 from moving toward the other side from the second reference point.

Accordingly, when the head arm assembly 200 is tilted upward relative to the tension arm assembly 100, or the tension arm assembly 100 is tilted downward relative to the base arm assembly 10, the shaft core 124 linearly moves toward the head arm assembly 200, and the second stopper member 126 moves together with the shaft core 124 while fixed at the second reference point.

As a result, the first stopper member 125 relatively moves toward the other side from the first reference point, and the elastic member 123 is compressed, making it possible to provide the tension compensating for the self-loads of the head arm assembly 200 and the lighting unit 300.

In addition, when the head arm assembly 200 is tilted downward relative to the tension arm assembly 100, or the tension arm assembly 100 is tilted upward relative to the base arm assembly 10, the shaft core 124 linearly moves toward the base arm assembly 10, and the first stopper member 125 moves together with the shaft core 124 while fixed at the first reference point.

As a result, the second stopper member 126 relatively moves toward the one side from the second reference point, and the elastic member 123 is compressed, making it possible to provide the tension compensating for the self-loads of the head arm assembly 200 and the lighting unit 300.

Meanwhile, in such a tilting operation process, a load is concentrated on the support unit 130. Accordingly, in the present embodiment, a load distribution holder 140 configured to surround the circumference of each of the support unit 130 and the tension providing unit 120 and fix the support unit 130 and the tension providing unit 120 to each other may be included for the purpose of distributing the load concentrated on the support unit 130 toward the tension providing unit 120.

A through-hole into which the support unit 130 and the tension providing unit 120 are inserted may be formed in the load distribution holder 140, and specifically, the load distribution holder 140 may include a first fixing part 141 configured to surround the circumference of the tension providing unit 120 and a second fixing part 142 configured to surround the circumference of the support unit 130.

The first joint unit 150 is disposed to be connected to the head arm assembly 200, rotatably fixes the first rotating shaft 127 disposed at one side of the tension providing unit 120 at a first point, and rotatably fixes the second rotating shaft 132 disposed at one side of the support unit 130 at a second point spaced apart from the first point.

In addition, in the present embodiment, the first joint unit 150 may include a first joint member 151 connected to the first rotating shaft 127 and the second rotating shaft 132 and a rotary joint member 152 rotatably connected to the first joint member 151.

The second joint unit 160 is disposed to be connected to the base arm assembly 10, rotatably fixes a third rotating shaft 128 disposed at the other side of the tension providing unit 120 at a third point, and rotatably fixes a fourth rotating shaft 133 disposed at the other side of the support unit 130 at a fourth point spaced apart from the third point.

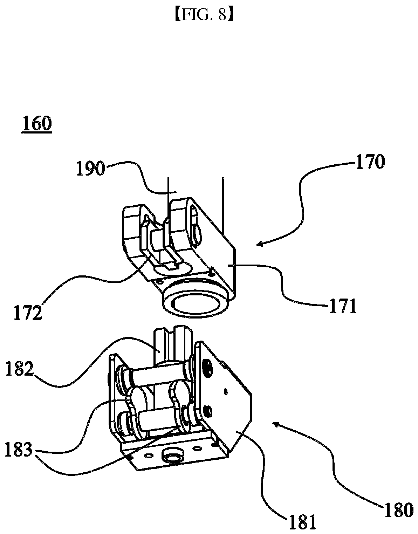

FIG. 8 is a detailed view of the second joint unit 160 of the tension arm assembly 100 in the multi-joint lighting device according to one embodiment of the present invention.

As illustrated in FIG. 8, in the present embodiment, the second joint unit 160 is formed in a form in which a first joint structure 170, a second joint structure 180, and a connection shaft 190 are coupled to each other.

The first joint structure 170 includes a second-first joint member 171 on which the third point where the third rotating shaft 128 is fixed is formed and a first coupling member 172 coupled to an inner side of the second-first joint member 171 to increase a coupling force with the second joint structure 180.

In addition, the second joint structure 180 has the fourth point where the fourth rotating shaft 133 is fixed formed thereon and is formed to be able to be coupled to the first joint structure 170.

To this end, the second joint structure 180 includes a second-second joint member 181 on which the fourth point where the fourth rotating shaft 133 is fixed is formed and a second coupling member 182 disposed at an inner side of the second-second joint member 181 to increase a coupling force with the first joint structure 170 by being coupled to the first coupling member 172.

Meanwhile, the second joint structure 180 may further include a cam member 183 disposed to be rotatable together with the fourth rotating shaft 133, and the cam member 183 serves to rotate together with the fourth rotating shaft 133 and limit a maximum tilting angle in the tilting operation process.

In addition, the connection shaft 190 may have one portion connected to the base arm assembly 10 to be rotatable about a rotation axis in the vertical direction and another portion passing through the first joint structure 170 to be fixed to the second joint structure 180.

Meanwhile, referring back to FIGS. 6 and 7, the external frame 110 is disposed to surround the components inside the tension arm assembly 100 described above.

In the present embodiment, the external frame 110 includes a first frame 110a and a second frame 110b coupled to each other to surround the support unit 130 and the tension providing unit 120, a third frame 110c and a fourth frame 110d coupled to each other to surround the first joint unit 150, and a fifth frame 110e and a sixth frame 110f coupled to each other to surround the second joint unit 160.

At this time, the third frame 110c and the fifth frame 110e may be tiltably connected to the first frame 110a, and the fourth frame 110d and the sixth frame 110f may be tiltably connected to the second frame 110b.

In addition, in the present embodiment, the tension arm assembly 100 may include a plurality of spacing members 116 disposed between the external frame 110 and the tension providing unit 120 and between the external frame 110 and the support unit 130 at one side and the other side.

The spacing members 116 are each formed to have a curved shape as a whole and formed to have elasticity to cause the external frame 110 and the tension providing unit 120 to be spaced apart from each other and cause the external frame 110 and the support unit 130 to be spaced apart from each other, thereby preventing generation of friction in the tilting operation of the tension arm assembly 100.

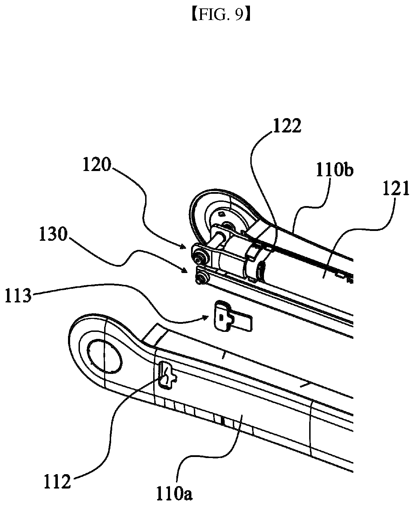

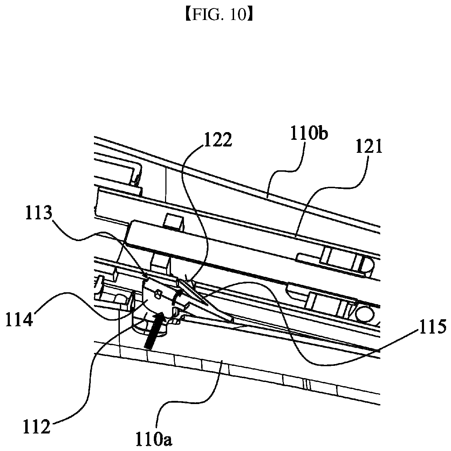

In addition, FIGS. 9 and 10 are views illustrating a locking structure of the tension arm assembly 100 in the multi-joint lighting device according to one embodiment of the present invention.

As illustrated in FIGS. 9 and 10, in the present embodiment, a locking member 113 disposed on the external frame 110 to constrain the tilting operation of the tension arm assembly 100 may be further included.

Specifically, in the present embodiment, an exposure hole 112 is formed to pass through the first frame 110a, and a portion of the locking member 113 is exposed to the outside through the exposure hole 112.

In addition, a catching part 115 formed to protrude toward the tension providing unit 120 may be formed on an inner side of the locking member 113, and a catching hole 122 that is recessed to catch the catching part 115 therein may be formed in the unit housing 121 of the tension providing unit 120.

Accordingly, a user may press the portion of the locking member 113 exposed through the exposure hole 112 from outside the first frame 110a and catch the catching part 115 in the catching hole 122, and in such a case, movement of the shaft core 124 of the tension providing unit 120 may be limited, and the tilting operation of the tension arm assembly 100 may be constrained.

Exemplary embodiments according to the present invention have been described above, but the fact that the present invention may be embodied in specific forms other than the above-described embodiments without departing from the gist or scope thereof should be apparent to those of ordinary skill in the art. Therefore, the above-described embodiments should be considered illustrative instead of limiting, and accordingly, the present invention is not limited to the above description and may be changed within the scope of the appended claims and their equivalents.

### [Reference numerals]

5: Settling base
10: Base arm assembly
100: Tension arm assembly
110: External frame
120: Tension providing unit
130: Support unit
140: Load distribution holder
150: First joint unit
160: Second joint unit
170: First joint structure
180: Second joint structure
190: Connection shaft
200: Head arm assembly
205: Slip ring module
240: Display unit
244: Image controller
245: Gyro sensor
300: Lighting unit

## Claims

1. A multi-joint lighting device comprising:
a lighting unit including a light emission module configured to radiate light toward a target;
a head arm assembly connected to the lighting unit;
a base arm assembly connected to a settling base fixed to a predetermined settling point; and
a tension arm assembly having one side tiltably connecting the head arm assembly and the other side tiltably connected to the base arm assembly and providing tension compensating for self-loads of the head arm assembly and the lighting unit according to a tilting angle of the head arm assembly to implement a free-stop height adjustment operation of the lighting unit.

2. The multi-joint lighting device of claim 1, wherein:
the head arm assembly is connected to the tension arm assembly to be rotatable about a rotation axis in a direction parallel to an extending direction of the tension arm assembly; and
a slip ring module configured to maintain electrical connection between the head arm assembly and the tension arm assembly is disposed at a connecting portion between the head arm assembly and the tension arm assembly.

3. The multi-joint lighting device of claim 1, wherein:
the lighting unit is connected to the head arm assembly to be rotatable about a rotation axis in a horizontal direction; and
a slip ring module configured to maintain electrical connection between the lighting unit and the head arm assembly is disposed at a connecting portion between the lighting unit and the head arm assembly.

4. The multi-joint lighting device of claim 3, further comprising a display unit disposed on the head arm assembly to display a predetermined image and formed to rotate relative to the head arm assembly together with the lighting unit,
wherein the display unit includes a gyro sensor configured to sense an angle of the display unit relative to the direction of gravity and an image controller configured to, based on a sensing value of the gyro sensor, control rotation of an image transmitted by the display unit.

5. The multi-joint lighting device of claim 1, wherein the tension arm assembly includes:
a support unit configured to provide a support force between the head arm assembly and the base arm assembly;
a tension providing unit disposed parallel to the support unit and configured to provide the tension compensating for the self-loads of the head arm assembly and the lighting unit according to the tilting angle of the head arm assembly;
a first joint unit disposed to be connected to the head arm assembly and configured to rotatably fix a first rotating shaft disposed at one side of the tension providing unit at a first point and rotatably fix a second rotating shaft disposed at one side of the support unit at a second point spaced apart from the first point; and
a second joint unit disposed to be connected to the base arm assembly and configured to rotatably fix a third rotating shaft disposed at the other side of the tension providing unit at a third point and rotatably fix a fourth rotating shaft disposed at the other side of the support unit at a fourth point spaced apart from the third point.

6. The multi-joint lighting device of claim 5, wherein the tension providing unit includes:
a shaft core that extends in a direction parallel to the support unit, has the first rotating shaft formed at one side and the second rotating shaft formed at the other side, and is formed to be linearly movable toward the one side or the other side;
an elastic member disposed to surround a circumference of a portion of the shaft core and formed to have elasticity to provide resistance against a compressive force;
a first stopper member disposed at one side of the elastic member to be movable along the shaft core and restricted from moving toward the one side past an arbitrary first reference point formed on the shaft core; and
a second stopper member disposed at the other side of the elastic member to be movable along the shaft core and restricted from moving toward the other side past an arbitrary second reference point formed on the shaft core.

7. The multi-joint lighting device of claim 6, wherein the tension providing unit further includes a unit housing disposed to surround the circumference of each of the shaft core and the elastic member and formed to be movable together with the shaft core.

8. The multi-joint lighting device of claim 5, wherein the second joint unit includes:
a first joint structure on which the third point where the third rotating shaft is fixed is formed; and
a second joint structure on which the fourth point where the fourth rotating shaft is fixed is formed and which is formed to be able to be coupled to the first joint structure.

9. The multi-joint lighting device of claim 8, wherein the second joint unit further includes a connection shaft having one portion connected to the base arm assembly to be rotatable about a rotation axis in a vertical direction and another portion passing through the first joint structure to be fixed to the second joint structure.
